# EUROPÄISCHE PATENTSCHRIFT

(11) **EP 0 987 712 B1**
(45) Veröffentlichungstag und Bekanntmachung des Hinweises auf die Patenterteilung: **19.05.2004**
(21) Anmeldenummer: 99203054.4
(22) Anmeldetag: 17.09.1999
(51) Int. Cl.: G11B 33/04

(54) **Halterung für einen scheibenförmigen Informationsträger und plattenförmiger Träger mit einer solchen Halterung**
Clamping device for disc shaped information carrier and disc shaped support comprising the clamping device
Dispositif de serrage pour support d'information en forme de disque et plateau de support comprenant ce dispositif de serrage

(30) Priorität: 18.09.1998 CH 191598; 25.07.1999 CH 136599
(43) Veröffentlichungstag der Anmeldung: 22.03.2000
(73) Patentinhaber: Buchbinderei Burkhardt AG, 8617 Mönchaltorf (CH)
(72) Erfinder: Bruderer, Markus, 8610 Uster (CH); Burkhardt, Hans, 8126 Zumikon (CH); Dietrich, Hansjörg, 6405 Immensee (CH); Leuenberger, Bruno, 8623 Wetzikon (CH)
(74) Vertreter: Spierenburg, Pieter

(56) Entgegenhaltungen:
- WO-A-97/00216
- DE-C- 19 505 230
- DE-U- 9 201 879
- DE-U- 29 519 047
- FR-A- 2 689 106
- US-A- 4 903 829
- US-A- 5 494 156
- US-A- 5 515 968
- US-A- 5 558 220

## Beschreibung

Die Erfindung betrifft eine Halterung für einen scheibenförmigen Informationsträger nach dem Oberbegriff des Patentanspruchs 1, und einen plattenförmigen Träger mit einer solchen Halterung nach dem Oberbegriff des Patentanspruchs 11.

Für die jetzt in grosser Anzahl vorhandenen Compact Discs (CD), welche als Tonträger, Datenträger oder neuerdings auch als Videoträger verwendet werden, gibt es eine Vielzahl von Aufbewahrungsmöglichkeiten. Die übliche Aufbewahrung geschieht in einer flachen viereckigen Hülle, der mit einem drehbar angelenkten Deckel versehen ist. Innerhalb der Hülle ist ein Träger mit den Konturen der CD und einer mittigen Halterung vorgesehen. Eine solche Halterung besteht typischerweise aus einer Vielzahl von Z-förmigen Zungen, die am Träger angelenkt und von Ausschnitten umgeben sind. Dadurch können die Zungen geringfügig nach innen gedrückt werden, so dass die Zungen in die kreisförmige Aufnahme der CD hineingreifen können. Die Z-förmige Zungen sind spitz zulaufend ausgebildet und können in einer Variante der Halterung zwischen festen vorstehenden, ebenfalls spitz zulaufenden Fixierungen vorgesehen sein. Bei allen bekannten Ausbildungen der Halterung sind die Z-förmigen Zungen mindestens dreimal so hoch als die Dicke der CD, damit eine einwandfreie Klemmbefestigung gewährleistet werden kann.

Beispielsweise ist aus DE-U-295 19 047 eine Aufnahmevorrichtung für einen scheibenförmigen Datenträger, insbesondere CD, bekannt, bei welcher der mittlere Bereich eine axial von der Scheibenebene abgesetzte Erhöhung aufweist, die einen Haltestutzen und eine koaxial zu diesem und innerhalb des Stutzens liegende Ausbauchung trägt. Einschnitte oder Ausnehmungen innerhalb der Erhöhung dienen dazu, dass der Haltestutzen in mehrere nebeneinanderliegende Ausschnitte aufgeteilt ist. Durch die Materialschwächung der Erhöhung, welche durch eine ringförmige nutartige Vertiefung bewirkt wird, ergibt sich eine Gelenk stelle. Damit können die einzelnen Abschnitte durch Drücken der Ausbauchung nach innen bewegt werden, um einen CD aufzunehmen. Die hier erwähnte Aufnahmevorrichtung hat jedoch dieselben Nachteile wie oben angegeben.

Seit einiger Zeit werden solche CD's auch als Beilage für Bücher, Informationsbroschüren oder dergleichen verwendet, wobei sie in der Regel in einer Zeigetasche aufbewahrt werden. Damit ist die CD wenig gegen mechanische Verformungen geschützt und andererseits kann eine in einem Buch eingelegte CD gegenüber den Buchseiten in den Randbereichen zu Verformungen führen, was nicht gerade ästhetisch ist.

Es sind ferner als Kartonausschnitt ausgebildete Buchdeckel bekannt, die eine aus Kunststoff tiefgezogene Platte aufweisen, die auf ihrer Rückseite vier seitlich vorstehende Befestigungslappen besitzt und von der Rückseite her in ein Loch des Buchdeckels eingelegt ist. Die Lappen sind auf der Rückseite des Buchdekkels mit diesem verklebt. Die Rückseite der Platte ist sodann mit einem aufgeklebten Blatt abgedeckt. Somit lässt sich eine Compact Disc mit dem Buchdeckel integrieren. Jedoch muss der Buchdeckel relativ dick sein, damit die CD nicht vorsteht. Für unterschiedliche Dicken der Buchdeckel müssen ausserdem jeweils entsprechend unterschiedliche Platten durch Tiefziehen hergestellt werden, was vergleichsweise aufwendig und für kleinere Auflagen kaum rentabel ist.

Der Erfindung liegt deshalb die Aufgabe zugrunde, eine Halterung für einen scheibenförmigen Informationsträger zu schaffen, die eine geringe Höhe aufweist und dennoch eine ausgezeichnete Klemmbefestigung gewährleistet. Eine weitere Aufgabe besteht darin, einen plattenförmigen Träger zu schaffen, der sich für Buchdeckel unterschiedlicher Dicke eignet und kostengünstig hergestellt werden kann.

Diese Aufgabe wird durch eine Halterung mit den Merkmalen des Patentanspruchs 1 bzw. durch einen Träger mit den Merkmalen des Patentanspruchs 10 gelöst.

Durch die Anordnung einer mittigen Abstützung, die fest mit der den Träger für die CD bildenden Unterlage verbunden ist, wird einerseits eine stabile Aufnahme für die kreisförmige, zentrale Öffnung der CD geboten und kann andererseits eine leicht federnde Anlenkung der Klemmelemente erreicht werden. Dies erhöht die mechanische Stabilität der erfindungsgemässen Halterung. Die Klemmelemente sind vorzugsweise quaderförmig ausgebildet, damit eine erhöhte Reibfläche mit der Innenseite des Kreislochs des CD gewährleistet wird, wodurch ein Drehen der CD auf der Halterung unterbunden wird. Ferner hat es sich bewährt, wenn die Klemmelemente auf ihrer Aussenseite mit einer flachen Nut versehen sind, wodurch der Innenrand des Kreislochs geringfügig von den Klemmelementen umgriffen wird. Um ein einfaches Aufsetzen der CD zu gewährleisten sind die quaderförmigen Klemmelemente an ihren freien Enden leicht angefast.

Die Herstellung des plattenförmigen Trägers ist sehr einfach. Nachdem im Buchdeckel eine kreisrunde Öffnung gestanzt ist, muss lediglich der Träger in diese Öffnung eingepresst werden, was mit einer geeigneten Pressvorrichtung sehr schnell erfolgen kann. Der Träger lässt sich so einpressen, dass er mit seiner Oberseite genau bündig ist mit der Oberseite des aus Karton bestehenden Aufnahmeteils oder Buchdeckels. Diese Bündigkeit ist nun unabhängig vom Verhältnis der Dicke des Buchdeckels zur Dicke des Trägers. Bedingung ist lediglich, dass der Träger weniger dick ist als der Buchdeckel.

Ein lückenloser Übergang zwischen dem Trägerrand und dem Rand der kreisrunden Öffnung ergibt sich dann, wenn der Träger einen radial vorstehenden Flansch aufweist, der aussenseitig bündig in den Aufnahmeteil aus Karton eingepresst ist. Der Träger ist vorzugsweise im Spritzgussverfahren aus einem geeigneten Kunststoff hergestellt.

Weitere Vorteile der Erfindung folgen aus den abhängigen Patentansprüchen und aus der nachfolgenden Beschreibung, in welcher die Erfindung anhand eines in den schematischen Zeichnungen dargestellten Ausführungsbeispieles näher erläutert wird. Es zeigt:
- Fig. 1: eine perspektivische Darstellung einer ersten Ausführungsform der Halterung,
- Fig. 2: eine Obenansicht derselben Halterung der Figur 1,
- Fig. 3: eine Draufsicht auf die Halterung in Richtung des Pfeiles A in Figur 1,
- Fig. 4: eine Draufsicht auf einen scheibenförmigen Träger mit einer Halterung gemäss Figur 1,
- Fig. 5: einen Querschnitt durch den Träger längs der Linie B-B in Figur 4,
- Fig. 6: eine Draufsicht auf eine zweite Ausführungsform der Halterung,
- Fig. 7: eine perspektivische Darstellung der zweiten Halterung der Figur 6,
- Fig. 8: eine Ansicht auf den in einem Aufnahmeteil gepressten Träger,
- Fig. 9: einen Schnitt längs der Linie C-C der Figur 8, und
- Figuren 10 und 11: schematisch das Einsetzen des Trägers in den Aufnahmeteil.

In den Figuren sind für dieselben Elemente jeweils dieselben Bezugszeichen verwendet worden und erstmalige Erklärungen betreffen alle Figuren, wenn nicht ausdrücklich anders erwähnt.

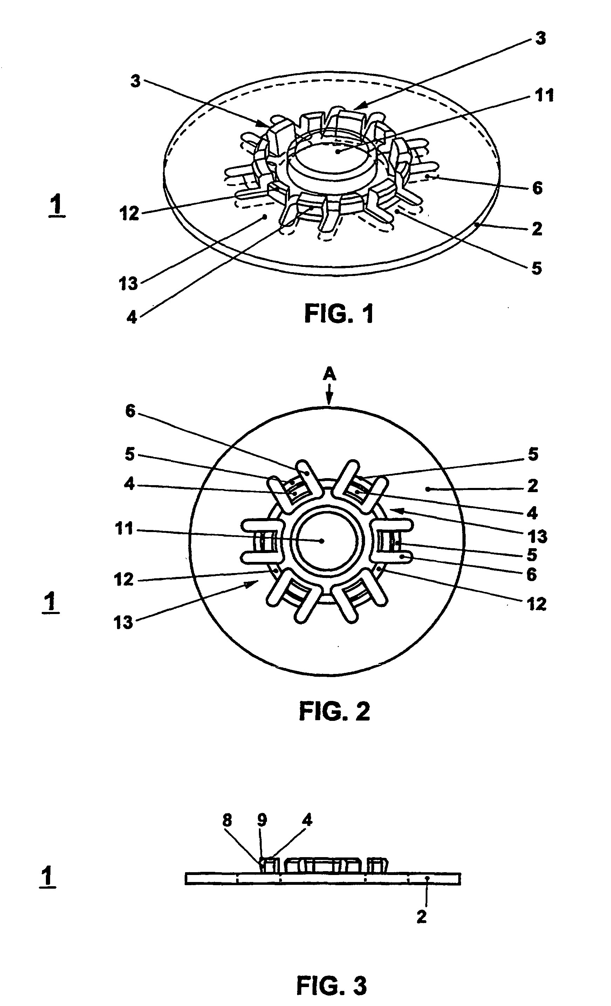

In der Figur 1 ist eine erste Ausführungsform einer Halterung 1 für scheibenförmige Informationsträger, insbesondere Compact Discs (CD), dargestellt, die eine als Scheibe ausgebildete Unterlage 2 und diverse Klemmelemente 3 aufweist. Diese Klemmelemente 3 greifen in bekannter Weise in die zentrale Öffnung der hier nicht-dargestellten CD ein, um diese festzuhalten. Wie in der Figur erkennbar, sind die Klemmelemente 3 als quaderförmige, kleine Pfosten 4 ausgebildet, die einstückig als L-förmige Zunge 5 ausgebildet und von einem U-förmigen Ausschnitt 6 in der Unterlage 2 umgeben sind. Somit ist die Zunge 5 einseitig an der Unterlage 2 angelenkt und kann durch Eindrücken geringfügig nach innen bewegt werden - wie an sich bei den bekannten CD-Halterungen. Wie in der Figur 1 und noch deutlicher in der Figur 3 ersichtlich, ist der Pfosten 4 auf der Aussenseite leicht hinterschnitten, wodurch die Aussenwand 8 leicht nach aussen geneigt ist, und mit einer Anfasung 9 versehen. Statt der Neigung der Aussenwand 8 kann auch eine flache Nut (hier nicht weiter dargestellt) vorgesehen sein. Wie in den Figuren 1 bis 3 ersichtlich sind die Klemmelemente 3 auf einem regelmässigen Abstand zueinander um einer mittigen Abstützung 11 angeordnet, die hier als massive kreiszylindrische Erhöhung oder Kreisscheibe ausgebildet ist. Zwischen den einzelnen Klemmelementen oder Zungen 5 sind ferner Zentrierelemente 12 auf den die Abstützung 11 mit der Unterlage 2 verbindenden Stegen 13 angeformt. Diese Zentierelemente 12 haben hier eine trapezoidale Form und sind in einem Kreis angeordnet, der der zentralen Öffnung des CD entspricht und somit für die Zentrierung der aufzunehmenden CD dient.

Die Pfosten 4 der Klemmelemente 3 und die Kreisscheibe 11 weisen nun gegenüber der Unterlage 2 eine Höhe auf, die höchstens der zweifachen Dicke der CD entspricht. In der Praxis ist die Dicke der CD etwa 1 mm und die Höhe der Pfosten 4 und der Kreisscheibe 11 gegenüber der Unterlage 2 etwa 1,6 mm. Damit stehen die Klemmelemente 3 und die Abstützung 11 nur unwesentlich über die Oberfläche der CD vor und eignet sich die hier beschriebene Halterung 11 ausgezeichnet, um CD's als Beilage in Büchern, Broschüren oder dergleichen beizufügen. Die Unterseite der Unterlage 2 kann dazu in an sich bekannter Weise mit einer Klebfolie versehen sein, um diese auf der Innenseite eines Buchumschlages oder dergleichen anzubringen.

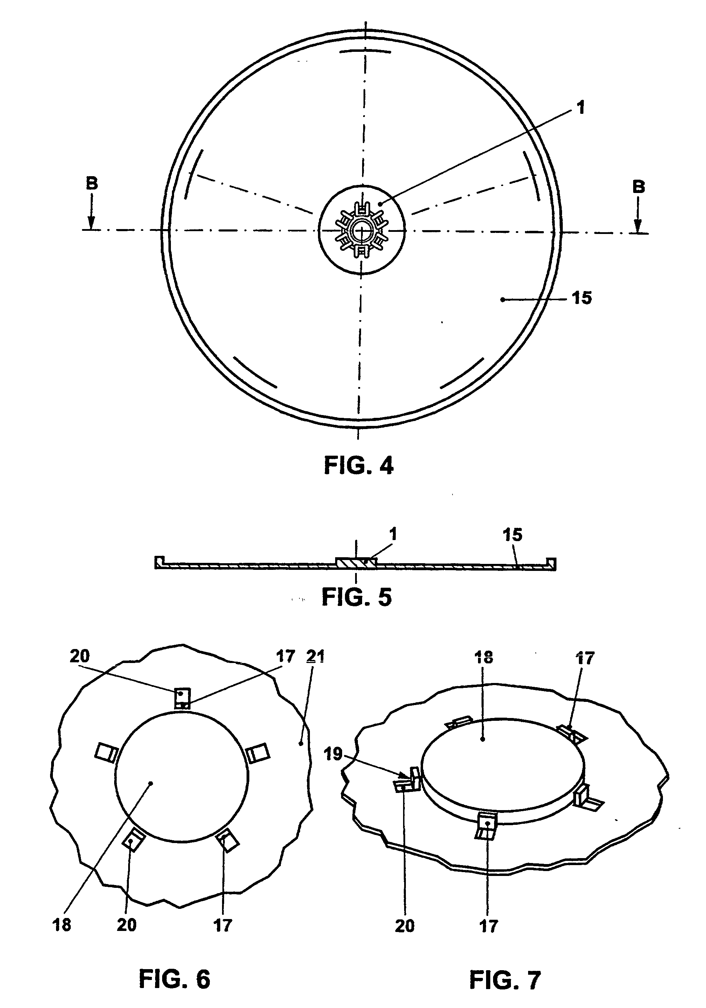

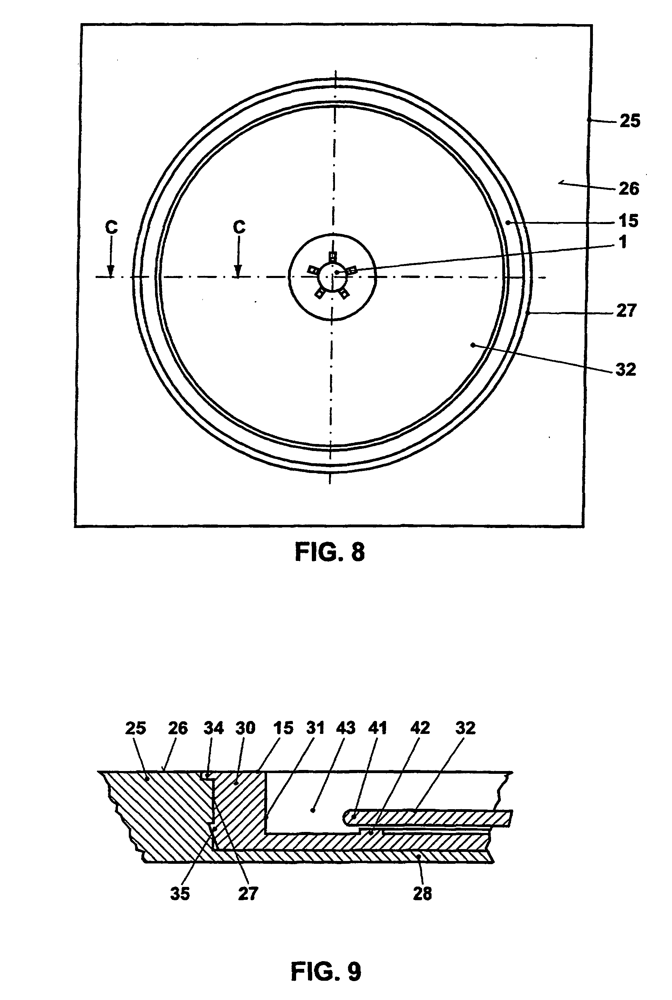

In einer anderen Ausführung wie in Figur 4 dargestellt, ist die Halterung 1 auf einem scheibenförmigen Träger 15 vorgesehen, welche in ein kreisrundes Sackloch eines Buchdeckels eingepresst werden kann, wie nachstehend mit Bezug auf die Figuren 8 bis 11 beschrieben ist.

In den Figuren 6 und 7 ist nun eine zweite Ausführungsform der Halterung 1 dargestellt, welche hier aus fünf quaderförmigen Pfosten 17 besteht, die auf regelmässigen Abstand zueinander und in einem geringen Abstand zu einer mittigen Abstützung oder massiv ausgebildete Kreisscheibe 18 angeordnet sind. Auf den Aussenwänden 19 der Pfosten 17 ist jeweils ein rechteckiger Ausschnitt 20 in der Unterlage 21 des Trägers 15 vorgesehen. Damit erhalten die Pfosten 17 eine minimale hebelartige Beweglichkeit. Aus der perspektivischen Darstellung der Figur 7 ist die Anordnung der Pfosten 17 und der Kreisscheibe 18 noch besser ersichtlich. Die Pfosten 17 sind dabei leicht nach aussen geneigt, so dass die als Klemmelemente wirkende Pfosten 17 den Rand der zentralen Öffnung des CD leicht umgreifen. Auch bei dieser Ausführung sind die Höhe der Pfosten 17 und der Kreisscheibe 18 höchstens zweimal die Dicke der CD. Die Pfosten 17 können ebenfalls auf der Aussenseite leicht hinterschnitten, d.h. nach aussen leicht geneigt, ausgebildet oder auch mit einer flachen Nut versehen sein. Auch können die Aussenwände 19 der Pfosten 17 leicht aufgerauht sein, um ein Drehen der CD in der Halterung 1 zu verhindern.

Die oben dargestellte Halterung 1 bzw. der oben dargestellte Träger 15 sind ferner im einem Spritzgussverfahren aus einem geeigneten Kunststoff hergestellt, vorzugsweise aus Polystyrol. Es versteht sich aber, dass auch andere Materialien für die Herstellung geeignet sein können, beispielsweise aus Chinaschilf wie es in einem Herstellungsverfahren der Firma NAPAC AG bekannt ist.

Es versteht sich für den Fachmann, dass auch verschiedene Varianten der oben angeführten Ausführungen möglich sind. Beispielsweise können die massive Kreisscheiben 11 und 18 auch ringförmig ausgebildet sein, um die notwendige Steifigkeit zu gewährleisten.

Figur 8 zeigt nun eine Draufsicht des Trägers 15, der in einen Aufnahmeteil 25 eingepresst ist. Der Aufnahmeteil 25 kann beispielsweise als Buchdeckel ausgebildet sein, der vorzugsweise ein Kartonzuschnitt ist mit einer Stärke von 3 bis 5 mm. In der Vorderseite 26 des Aufnahmeteils 25 ist eine kreisrunde Öffnung 27 eingearbeitet, die vorzugsweise durchgehend ist, aber auch als Sackloch ausgebildet sein kann. Die Öffnung 27 wird beispielsweise durch Stanzen hergestellt. Wie die Figur 9 zeigt, ist unterhalb der Öffnung 27 im Aufnahmeteil 25 eine vergleichsweise dünne Rückwand 28 vorhanden. Es ist jedoch auch möglich, dass die durchgehende Öffnung 27 mit einer Folie abzudecken.

Der Träger 15 ist scheibenförmig mit einem kreisrunden Rand 30 ausgebildet. Mittig in einer Vertiefung 31 ist die oben beschriebene Halterung 1 angeformt, die ein Mittelloch eines Informationsträgers oder einer Compact Disc 32 durchgreift und diesen lösbar mit dem Träger 15 verbindet. Mit der Halterung 1 wird gewährleistet, dass der Träger 15 zusammen mit der aufgenommenen CD 32 nicht oder nur unwesentlich über den als Buchdeckel ausgestalteten Aufnahmeteil 25 vorsteht.

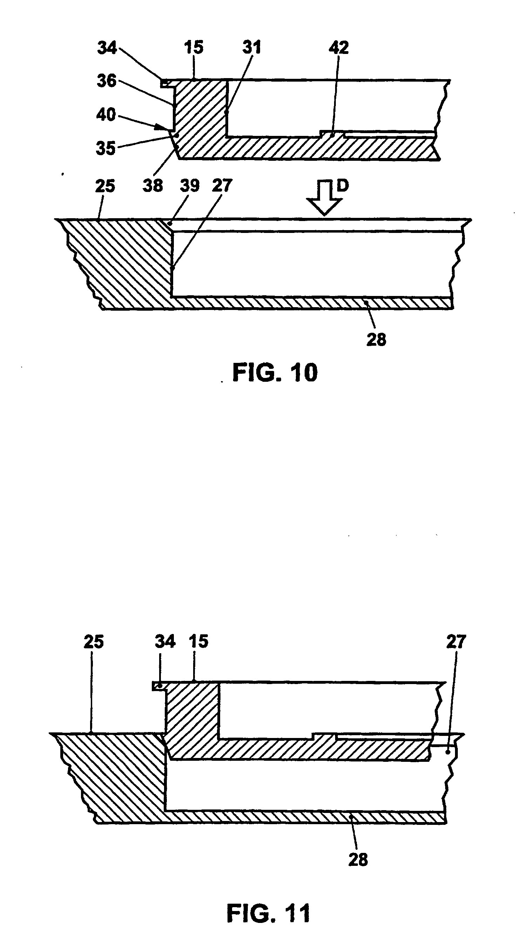

Wie die Figur 9 zeigt, ist am umlaufenden äusseren Rand 30 des Trägers 15 radial vorstehend ein Flansch 34 sowie eine Rippe 35 angeformt. Der Flansch 34 als auch die Rippe 35 sind vorzugsweise umlaufend ausgebildet, können aber auch abschnittsweise vorgesehen sein. Der Träger 15 ist in die Öffnung 27 des Aufnahmeteils 25 eingepresst, wie dies die Figuren 10 und 11 zeigen. Der Rand 30 weist aussenseitig eine umlaufende Vertiefung 36 auf, die einen Aussendurchmesser aufweist, der im wesentlichen dem Innendurchmesser der Öffnung 27 entspricht. Der Flansch 34 und die Rippe 35 überragen den Aussendurchmesser der Vertiefung 36 geringfügig, wobei der Flansch 34 stärker vorsteht als die Rippe 35. Um den Träger 15 in den Aufnahmeteil 25 zu befestigen, wird dieser gemäss Figur 10 in Richtung des Pfeils D auf die Öffnung 27 aufgelegt, wobei eine untere konische Fläche 38 den Träger 15 in der Öffnung 27 zentriert. Die Öffnung 27 weist zudem eine trichterförmige Erweiterung 39 auf, die mit der Fläche 38 zusammenwirkt.

Der Träger 15 kann ohne Kraftaufwand in die in Figur 11 gezeigte Position gebracht werden. Um den Träger 15 weiter in die Öffnung einzuführen, ist eine Presskraft erforderlich, die mit einer geeigneten Presse ausgeübt werden kann. Wird der Träger 15 über die in Figur 11 gezeigte Position weiter nach unten bewegt, so wird die Rippe 35 mit seiner scharfen Kante 40 in die Öffnung 27 hineingestossen. Diese Bewegung wird so weit fortgeführt, bis der Träger 15 an der Rückwand 28 anliegt (vergl. Figur 9) und der Flansch 34 mit seiner Aussenseite völlig bündig ist mit der Vorderseite 26 des Aufnahmeteils 25. Der Flansch 34 deformiert hierbei den Aufnahmeteil 25 geringfügig im Bereich der Erweiterung 39. Die Rippe 35 mit der scharfen Kante 40 greift in den Aufnahmeteil 25 ein und wirkt somit als Rückhaltemittel, um ein Herausheben des Trägers 15 zu verhindern. Der Rückhalt sollte mindestens so gross sein, dass der Informationsträger oder die Compact Disc 32 an seinem Rand 41 gefasst und von der Halterung 1 gelöst werden kann, ohne den Träger 15 aus dem Aufnahmeteil oder Buchdeckel 25 herauszuheben. Wie die Figur 9 zeigt, liegt der Rand 41 auf einer Rippe 42 des Trägers 15 auf und überragt diese geringfügig. Ist diese Rippe 42 mehrfach unterbrochen, so kann die CD 32 leichter gefasst werden. Zwischen dem Rand 41 und dem Träger 15 besteht eine Lücke 43, die ein Eingreifen und ein Fassen der CD 32 an ihrem Rand 41 ermöglicht.

Wie erwähnt, ist die Kombination von Träger 15 und Aufnahmeteil 25 als Buchdeckel vorgesehen. Die Öffnung 27 kann hierbei sowohl auf der Innenseite aber als auch auf der Aussenseite des Buchdeckels vorgesehen sein.

Das Verfahren zur Herstellung eines Buchdeckels 25 mit einem CD-Träger 15 sieht folgendermassen aus:

Auf einer Maschine, die ein Karussell mit mehreren Aufnahmen für Bücher oder Buchdeckel aufweist, wird in einer Einlegestation ein Buchdeckel oder ein ganzes Buch von Hand in eine Aufnahme gelegt. Die Aufnahme weist einen verschiebbaren und in einer bestimmten Position fixierbaren Rahmen auf. Für einen bestimmten Buchdeckel 25 oder ein bestimmtes Buch geschieht die richtige Einstellung des Rahmens einmalig. Danach wird das Karussell motorisch gedreht zu einer Zentrierstation, in welcher die Aufnahme bezüglich der Öffnung 27 zu zentrieren ist. Danach wird zu einer weiteren Station gedreht, in welcher eine papierene Abdeckung über der Öffnung 27 des Buchdeckels 25 ausgestanzt wird. In einer Leimstation wird sodann mittels Sprühdüsen auf den Boden der Öffnung 27 Leim aufgetragen. In einer Pressstation wird anschliessend die trichterförmige Erweiterung oder Anfasung 29 mittels eines Stempels vorgenommen. In einer weiteren Station wird sodann der CD-Träger 15 eingelegt und mittels einer Presse oder eines Stempels in den Buchdeckel 25 eingepresst. Nach einer weiteren Drehung wird die CD in einer Lieferstation auf die Halterung 1 aufgesteckt. Schlussendlich wird in einer Entnahmestation der fertige Buchdeckel 25 oder das fertige Buch von Hand aus der Aufnahme entnommen zum Versand bereit gestellt. Die oben beschriebene Maschine weist somit acht Stationen und acht Aufnahmen für Buchdeckel oder ganze Bücher auf. Mit einer solchen Maschine ist die Herstellung von Büchern oder Buchdeckel mit CD-Trägem sehr rationell und kostengünstig.

### Bezugszeichenliste

- 1: Halterung
- 2: Unterlage
- 3: Klemmelement
- 4: quaderförmiger Pfosten
- 5: L-förmige Zunge
- 6 7: U-förmiger Ausschnitt
- 8: Aussenwand
- 9 10: Anfasung
- 11: mittige Abstützung
- 12: Zentrierelement
- 13 14: Steg
- 15 16: scheibenförmiger Träger
- 17: quaderförmiger Pfosten
- 18: mittige Abstützung, Kreisscheibe
- 19: Aussenwand
- 20: rechteckiger Ausschnitt
- 21 22 23 24: Unterlage
- 25: Aufnahmeteil, Buchdeckel
- 26: Vorderseite
- 27: kreisrunde Öffnung
- 28 29: Rückwand
- 30: kreisrunder Rand
- 31: Vertiefung
- 32 33: Informationsträger, CD
- 34: Flansch
- 35: Rippe
- 36 37: umlaufende Vertiefung
- 38: konische Fläche
- 39: trichterförmige Erweiterung
- 40: scharfe Kante
- 41: Rand
- 42: Rippe
- 43: Lücke

## Patentansprüche

1. Halterung (1) für einen scheibenförmigen Informationsträger mit einer Unterlage (2; 21), einer mittigen kreisförmigen Abstützung (11, 18) und auf der Unterlage einstückig angeordneten, in die zentrale Öffnung des Informationsträgers hineingreifenden Klemmelementen (3; 17), die biegbar auf der Unterlage (2; 21) in einem regelmässigen Abstand zueinander um die Abstützung angeordnet sind, **dadurch gekennzeichnet, dass** die Unterlage (2, 21) eben und die Abstützung (11; 18) verbiegungssteif mit der ebenen Unterlage (2, 21) verbunden ist, und in unmittelbarer Nähe der Klemmelemente Ausschnitte (6, 20) in der ebenen Unterlage angeordnet sind, derart dass die Klemmelemente (3; 17) geringfügig seitlich gegen die Abstützung hin beweglich sind.

2. Halterung nach Anspruch 1, **dadurch gekennzeichnet, dass** die Klemmelemente (3; 17) und die Abstützung (11; 18) höchstens zweimal so hoch sind als die Dicke des als Compact Disc ausgebildeten scheibenförmigen Informationsträgers.

3. Halterung nach Anspruch 1 oder 2, **dadurch gekennzeichnet, dass** die Klemmelemente (3; 17) im wesentlichen quaderförmig ausgebildet sind.

4. Halterung nach einem der Ansprüche 1 bis 3, **dadurch gekennzeichnet, dass** die Klemmelemente (3; 17) auf ihrer Aussenwand (8; 19) mit einer flachen Nut versehen sind.

5. Halterung nach einem der Ansprüche 1 bis 3, **dadurch gekennzeichnet, dass** die Klemmelemente (3; 17) nach aussen hin leicht geneigt sind.

6. Halterung nach einem der Ansprüche 3 bis 5, **dadurch gekennzeichnet, dass** die quaderförmigen Klemmelemente (3; 17) auf ihrer Aussenwand (8; 19) mit einer leichten Anfasung (9) versehen sind.

7. Halterung nach einem der Ansprüche 3 bis 6, **dadurch gekennzeichnet, dass** die quaderförmigen Klemmelemente (17) auf geringem Abstand zur mittigen Abstützung (18) angeordnet sind und die Ausschnitte (20) rechteckig ausgebildet und auf der der Abstützung (18) abgewandten Seite der Klemmelemente (17) in der Unterlage (21) vorgesehen sind.

8. Halterung nach einem der Ansprüche 1 bis 6, **dadurch gekennzeichnet, dass** die Klemmelemente als L-förmige Zungen (5) ausgebildet sind, die einseitig an der Unterlage angelenkt und von einem U-förmigen Ausschnitt (6) in der Unterlage (2) umgeben sind.

9. Halterung nach Anspruch 8, **dadurch gekennzeichnet, dass** zwischen den L-förmigen Zungen (5) feste Stege (13) vorgesehen sind, die je ein trapezodiales, starr mit der Unterlage verbundenes Zentrierelement (12) aufweisen, welche Zentrierelemente (12) mit den Zungen (5) in einem Kreis ausgerichtet sind.

10. Halterung nach einem der Ansprüche 1 bis 9, **dadurch gekennzeichnet, dass** die mittige Abstützung (11; 18) kreiszylindrisch ausgebildet ist.

11. Plattenförmiger Träger (15) für einen scheibenförmigen Informationsträger, der eine Vertiefung aufweist, in der eine Halterung (1) nach einem der Ansprüche 1 bis 10 angeordnet ist, die ein Mittelloch des Informationsträgers (32) durchgreift und diesen lösbar mit dem Träger (15) verbindet, für einen plattenförmigen, eine Vorderseite und eine Rückseite aufweisenden Aufnahmeteil (25), der eine kreisrunde Öffnung (27) aufweist, in welcher der Träger (15) befestigbar ist, **dadurch gekennzeichnet, dass** der Träger (15) kreisrund ausgebildet ist und an seinem Rand (30) Rückhaltemittel (35) aufweist, die in die Innenwand der kreisrunden Öffnung (27) des Aufnahmeteiles (25) eingreifen, um diese beiden Teile miteinander zu verbinden, wobei die Höhe des kreisrunden Trägers (15) im Wesentlichen der Höhe der Innenwand der kreisrunden Öffnung (27) entspricht.

12. Träger nach Anspruch 11, **dadurch gekennzeichnet, dass** der äussere Rand (30) einen radial vorstehenden Flansch (34) aufweist, der aussenseitig bündig in den Aufnahmeteil (25) einpressbar ist.

13. Träger nach Anspruch 11 oder 12, **dadurch gekennzeichnet, dass** die Rückhaltemittel eine umlaufende Rippe (35) aufweisen, die eine scharfe Kante (40) besitzt und in den Aufnahmeteil (25) einpressbar sind.

14. Maschine zur Herstellung eines Aufnahmeteiles, insbesondere eines Buchdeckels (25) oder eines Buches, mit einer plattenförmigen Träger (15) gemäss Anspruch 11 bis 13, der eine Halterung (1) für einen scheibenförmigen Informationsträger aufweist, **dadurch gekennzeichnet, dass**
- ein Transportmittel mit Aufnahmen vorgesehen ist, um der Aufnahmeteil (25) zu verschiedenen Arbeitsstationen zu führen,
- eine Einlegestation vorgesehen ist, in welcher der Aufnahmeteil (25) in eine Aufnahme des Transportmittels eingelegt wird,
- eine Einlegestation vorgesehen ist, in welcher der plattenförmige Träger (15) in eine entsprechende kreisrunde Öffnung (27) im Aufnahmeteil (25) eingelegt wird,
- ein Pressstation vorgesehen ist, in welcher der Träger (15) in die kreisrunde Öffnung eingepresst wird, so dass der Rand des Trägers im Wesentlichen flach mit dem Aufnahmeteil (25) ist, und
- eine Entnahmestation vorgesehen ist, in welcher der Aufnahmeteil (25) aus der Aufnahme entnommen wird.

15. Maschine nach Anspruch 14, **dadurch gekennzeichnet, dass** eine Zentrierstation vorgesehen ist, in welcher die Aufnahme des Transportmittels bezüglich der kreisrunden Öffnung (27) des Aufnahmeteiles (25) zentriert wird.

16. Maschine nach Anspruch 14 oder 15, **dadurch gekennzeichnet, dass** eine Stanzstation vorgesehen ist, in welcher mittels eines Stempels eine Anfasung (29) in der kreisrunden Öffnung (27) des Aufnahmeteils (25) vorgenommen wird.

## Claims

1. Holder device (1) for a disk-shaped information carrier, with a base support (2; 21), a central circular support member (11; 18) and clamping elements (3; 17) mounted integrally on the base support and penetrating the central opening of the disk-shaped information carrier, which clamping elements being arranged flexible to the base support (2; 21) and surrounding the support member in a regular distance from each other, **characterized in that** the base support (2; 21) is flat and the support member (11; 18) is mounted rigidly to the flat base support (2; 21) and cut-outs (6; 20) are provided in the flat base support and in direct proximity to the clamping elements, such that the clamping elements (3; 17) are slightly movable towards the side of the support member.

2. Holder device according to claim 1, **characterized in that** the clamping elements (3; 17) and the support member (11; 18) having a height not twice the thickness of the disk-shaped information carrier formed as a Compact Disk.

3. Holder device according to claim 1 or 2, **characterized in that** the clamping elements (3; 17) are formed essentially in cuboid form.

4. Holder device according to one of claims 1 to 3, **characterized in that** the clamping elements (3; 17) are provided on their outer walls (8; 19) with a shallow groove.

5. Holder device according to one of claims 1 to 3, **characterized in that** the clamping elements (3; 17) are arranged slightly inclined towards the outside.

6. Holder device according to one of claims 3 to 5, **characterized in that** the cuboic clamping elements (3; 17) are provided on their outer walls (8; 19) with a slightly bevelled edge (9).

7. Holding device according to one of claims 3 to 6, **characterized in that** the cuboic clamping elements (17) are arranged at a small distance from the central support member (18) and that the cut-outs (21) are formed rectangular and are provided on the side of the clamping elements (17) distant from the support member.

8. Holder device according to one of claims 1 to 6, **characterized in that** the clamping elements are formed as L-shaped tongues (5) linked at one of their ends to the base support and surrounded by a U-shaped cut-out (6) provided in the base support,

9. Holder device according to claim 8, **characterized in that** between the L-shaped tongues (5) rigid bridges (13) are provided each comprising a trapezodial centring element (12) rigidly connected to the base support, the centring elements (12) with tongues (5) being arranged in a circle.

10. Holder device according to one of claims 1 to 9, **characterized in that** the central support member (11; 18) is provided as a circular cylindrical protrusion.

11. Plate-shaped support member (15) for a disk-shaped information carrier, which comprises a recess in which a holder device (1) is provided according to one of the claims 1 to 10, which penetrates a central opening of the information carrier (32) and detachably connects the latter with the support member (15), for a plate-shaped take-up member (25) presenting a front side and a back side and comprising a circular opening (27) in which the support member (15) can be mounted, **characterized in that** the support member (15) is laid out in circular shape and at its rim (3) is provided with retaining means (35) engaging the circular opening (27) of the take-up member (25) in order to interconnect the two elements, whereas the height of the circular support member (15) corresponds essentially to the height of the inner wall of the circular opening (27).

12. Support member according to claim 11, **characterized in that** the outer rim (30) is provided with a radially protruding flange (34) which can be pressed into the take-up member to be flush with the latter on its outer side.

13. Support member according to claim 11 or 12, **characterized in that** the retaining means comprise a rib (35) extending around the circumference provided with a sharp edge (4) and which can be pressed into the take-up member (25).

14. Machine for producing a take-up member, especially of a book cover (25) or of a book, with a plate-shaped support member (15) according to claims 11 to 13, which comprises a holder device (1) for a disk-shaped information carrier, **characterized in that**
- a transport means with take-up elements is provided, in order to move the take-up member (25) to different working stations,
- an insert station is provided for inserting the take-up member (25) into a frame of the transport means,
- an insert station is provided for inserting the plate-shaped support member (15) into the central opening (27) of the take-up member (25),
- a press station is provided for pressing the support member (15) into the central opening such that the rim of the support member (15) is essentially flush with the take-up member, and
- a pick-up station is provided, in which the take-up member (25) will be picked-up from the frame.

15. Machine according to claim 14, **characterized in that** a centering station is provided for centering the frame of the transport means relatively to the circular opening (27) of the take-up member (25).

16. Machine according to claim 14 or 15, **characterized in that** a punch station is provided, in which by means of a punch a bevelled edge (29) is made into the circular opening (27) of the take-up member (25).

## Revendications

1. Fixation (1) pour un support d'information en forme de disque avec une base (2; 21), un appui central en forme de cercle (11, 18) et des éléments de serrage (3; 17) disposés d'une seule pièce sur la base et s'engageant dans l'ouverture centrale du support d'information, lesquels sont disposés de manière flexible sur la base (2, 21) à une distance régulière les uns des autres autour de l'appui, **caractérisée en ce que** la base (2, 21) est plane et l'appui (11, 18) est relié de manière rigide à la base plane (2, 21) et **en ce qu'**à proximité immédiate des éléments de serrage sont ménagées des découpes (6, 20) dans la base plane de sorte que les éléments de serrage (3, 17) sont mobiles légèrement sur le côté en direction de l'appui.

2. Fixation selon la revendication 1, **caractérisée en ce que** les éléments de serrage (3; 17) et les appuis (11; 18) sont au plus deux fois plus hauts que l'épaisseur du support d'information en forme de disque réalisé comme un disque compact.

3. Fixation selon la revendication 1 ou 2, **caractérisée en ce que** les éléments de serrage (3; 17) sont essentiellement de forme parallélépipède.

4. Fixation selon l'une des revendications 1 à 3, **caractérisée en ce que** les éléments de serrage (3; 17) sont munis sur leur paroi extérieure (8; 19) d'une rainure plate.

5. Fixation selon l'une des revendications 1 à 3, **caractérisée en ce que** les éléments de serrage (3; 17) sont inclinés légèrement vers l'extérieur.

6. Fixation selon l'une des revendications 3 à 5, **caractérisée en ce que** les éléments de serrage parallélépipédiques (3; 17) sont munis sur leur paroi externe (8; 19) d'un léger biseau (9).

7. Fixation selon l'une des revendications 3 à 6, **caractérisée en ce que** les éléments de serrage parallélépipédiques (17) sont disposés à faible distance par rapport à l'appui central (18) et les découpes (20) ont une forme rectangulaire et sont prévues dans la base (21) sur la face des éléments de serrage (17), détournée de l'appui (18).

8. Fixation selon l'une des revendications 1 à 6, **caractérisée en ce que** les éléments de serrage sont réalisés comme des languettes en forme de L (5) qui sont articulées sur un côté à la base et sont entourées dans la base (2) par une découpe en forme de U (6).

9. Fixation selon la revendication 8, **caractérisée en ce qu'**entre les languettes (5) en forme de L, il est prévu des arcades fixes (13), qui présentent respectivement un élément de centrage trapézoïdale (12) relié rigidement à la base, éléments de centrage (12) qui sont orientés dans un cercle avec les languettes (5).

10. Fixation selon l'une des revendications 1 à 9, **caractérisée en ce que** l'appui central (11; 18) est réalisé de forme cylindrique circulaire.

11. Support en forme de plaque (15) pour support d'information en forme de disque, qui présente un évidement dans lequel est disposée une fixation (1) selon l'une des revendications 1 à 10, qui traverse un trou central du support d'information (32) et qui le relie de manière amovible avec le support (15), pour une partie de logement (25) en forme de plaque qui présente une face avant et une face arrière, partie de logement qui présente une ouverture de forme circulaire et ronde (27) dans laquelle peut être fixé le support (15), **caractérisé en ce que** le support (15) est de forme ronde et circulaire et présente sur son bord (30) des moyens de retenue (35) qui s'engagent dans la paroi interne de l'ouverture ronde et circulaire (27) de la partie de logement (25) pour relier ces deux parties entre elles, la hauteur du support rond et circulaire (15) correspondant essentiellement à la hauteur de la paroi interne de l'ouverture (27) ronde et circulaire.

12. Support selon la revendication 11, **caractérisé en ce que** le bord externe (30) présente une bride (34) saillante radialement qui peut être comprimée sur la face externe à niveau dans la partie de logement (25).

13. Support selon la revendication 11 ou 12, **caractérisé en ce que** les moyens de retenue présentent une nervure circulaire (35) qui possèdent une arête vive (40) et qui sont comprimables dans la partie de logement (25).

14. Machine pour la fabrication d'une partie de logement, en particulier d'un couvercle de livre (25) ou d'un livre avec un support en forme de plaque (15) selon la revendication 11 à 13 qui présente une fixation (1) pour un support d'information en forme de disque **caractérisé en ce**
- **qu'**il est prévu un moyen de transport avec des logements pour guider la partie de logement (25) à différents postes de travail,
- **qu'**il est prévu un poste d'introduction dans lequel la partie de logement (25) est insérée dans un logement du moyen de transport,
- **qu'**il est prévu un poste d'introduction dans lequel le support en fore de plaque (15) est inséré dans une ouverture ronde et circulaire correspondante (27) dans la partie de logement (25),
- **qu'**il est prévu un poste de pressage dans lequel le support (15) est pressé dans l'ouverture ronde et circulaire de sorte que le bord du support est sensiblement plat avec la partie de logement (25) et
- en ce qu'il est prévu un poste de prélèvement dans lequel la partie de logement (25) est prélevée du logement.

15. Machine selon la revendication 14, **caractérisé en ce qu'**il est prévu un poste de centrage dans lequel est centré le logement du moyen de transport par rapport à l'ouverture ronde et circulaire (27) de la partie de logement (25).

16. Machine selon la revendication 14 ou 15, **caractérisée en ce qu'**il est prévu un poste de découpe dans lequel il est effectué un chanfrein (29) au moyen d'un poinçon dans l'ouverture ronde et circulaire (27) de la pièce de logement (25).
